Europäisches Patentamt

European Patent Office

Office européen des brevets

(11) Veröffentlichungsnummer: **0 281 758 B1**

(12) **EUROPÄISCHE PATENTSCHRIFT**

(45) Veröffentlichungstag der Patentschrift: **24.06.92**

(21) Anmeldenummer: **88101496.3**

(22) Anmeldetag: **02.02.88**

(51) Int. Cl.5: **H04Q 11/04**

(54) **Digitale Schnittstelle einer integrierten Teilnehmeranschlussschaltungseinheit.**

(30) Priorität: **12.02.87 DE 3704408**

(43) Veröffentlichungstag der Anmeldung:
**14.09.88 Patentblatt 88/37**

(45) Bekanntmachung des Hinweises auf die
Patenterteilung:
**24.06.92 Patentblatt 92/26**

(84) Benannte Vertragsstaaten:
**AT BE CH DE FR GB IT LI NL SE**

(56) Entgegenhaltungen:

**ELECTRONIC DESIGN, Band 34, Nr. 2, 23.
Januar 1986, Seiten 115-120, Hasbrouck
Heights, New Jersey, US; L. LERACH et al.:
"Digital duo boosts flexibility and function of
telephone lines"**

**INTERNATIONAL CONFERENCE ON THE ISDN
AND ITS IMPACT ON INFORMATION TECH-
NOLOGY, London, 14.-16. Januar 1985, Seiten
103-109; G. GEIGER et al.: "VLSI chip set
spurs ISDN system innovation"**

**ELECTRONICS, Band 58, Nr. 24, 17. Juni 1985,
Seiten 54-57, New York, US; "Slic chip
shrinks phone-line interfaces"**

(73) Patentinhaber: **SIEMENS AKTIENGESELL-
SCHAFT
Wittelsbacherplatz 2
W-8000 München 2(DE)**

Patentinhaber: **THE PLESSEY COMPANY plc
Vicarage Lane
Ilford Essex, IG1 4AO(GB)**

Patentinhaber: **COMPAGNIE INDUSTRIELLE
DES TELECOMMUNICATIONS CIT-ALCATEL
S.A. dite:
33, rue Emeriau
F-75725 ParisCédex(FR)**

Patentinhaber: **ITALTEL SOCIETA ITALIANA
TELECOMUNICAZIONI s.p.a.
P.le Zavattari, 12
I-20149 Milano(IT)**

(72) Erfinder: **Lechner, Robert, Dipl.-Ing.
Dr. Bilcik Gasse 16
A-3100 Sankt Pölten(AT)**
Erfinder: **Rudolf, Hans-Werner, Dr.rer.nat.
Wörthstrasse 13
W-8000 München 80(DE)**

DATA COMMUNICATIONS, Band 14, Nr. 11, Oktober 1985, Seiten 181-184, New York, US; J. PARKER et al.: "Bipolar and MOS make the best of all possible network worlds"

INTERNATIONAL SWITCHING SYMPOSIUM, Phoenix, Arizona, 15.-20. März 1987, Seiten 577-581, IEEE; K. GALPIN et al.: "Progress in analogue line card LSI circuits in Europe"

"Elektronik", Band 34, Febr. 1985, Nr. 3, München, Deutschland, "Peripheral Board Controller für digitale Vermittlungssysteme", Seiten 45 bis 50

Erfinder: **Stader, Harald, Dipl.-Ing.**
**Starnbergerstrasse 21**
**W-8000 München 71(DE)**
Erfinder: **Wingerath, Norbert, Dipl.-Ing.**
**Zillertalstrasse 63**
**W-8000 München 70(DE)**
Erfinder: **Priest, Christopher Charles Andrew**
**Guildersfield Hill Farm Road**
**Taplow Maidenhead SL6 0HO(GB)**
Erfinder: **Dyer, Nigel Patrick**
**36 Grange Road**
**Chiswick London W 4(GB)**
Erfinder: **Galpin, Robert Keith Portway**
**6 Station Rise Marlow**
**Bucks SL7 1EH(GB)**
Erfinder: **Manca, Marcello**
**Via Settala, 8**
**I-20124 Milano(IT)**
Erfinder: **Mosca, Virgilio**
**Via C. Battisti 11**
**I-20122 Milano(IT)**
Erfinder: **Nicastro, Antonio**
**Via Dei Mille, 20**
**I-20010 Cormaredo - Milano(IT)**
Erfinder: **Albouy, Pierre**
**42 Rue Georges Brassems**
**F-22300 Lannion(FR)**
Erfinder: **Le Gougnec, Robert**
**Route de Perros-Guirec P.B. 344**
**F-22304 Lannion Cedex(FR)**
Erfinder: **Nadaradjane, Ramatchandirane Résidence les Huniers**
**Apt. 39 Boulevard Anatol le Braz.**
**F-22700 Perros-Guirec(FR)**

(74) Vertreter: **Fuchs, Franz-Josef, Dr.-Ing. et al**
**Postfach 22 13 17**
**W-8000 München 22(DE)**

## Beschreibung

Die Erfindung betrifft eine digitale Schnittstelle einer integrierten Teilnehmeranschlußschaltungseinheit für den Anschluß von analogen Teilnehmeranschlußleitungen eines digitalen Zeitmultiplex-Fernmeldenetzes, über die einerseits die Einstellung verschiedener Betriebszustände der Teilnehmeranschlußschaltungseinheit veranlaßt wird, andererseits die Abfrage der Ergebnisse der in der Teilnehmeranschlußschaltungseinheit vorgenommenen Teilnehmeranschlußleitungsindikationen erfolgt.

Mit Hilfe der integrierten Schaltkreistechnik gelingt es zwar, den Platzbedarf für relativ komplexe Baueinheiten immer weiter zu verringern. Eine Grenze wird dabei am ehesten durch die Anzahl der erforderlichen Anschlußstifte an eine solche Baueinheit vorgegeben, die insbesondere im Hinblick auf eine Herstellung von Anschlußverbindungen, z.B. durch Löten, nicht beliebig nahe benachbart zueinander angeordnet sein dürfen.

Bekannte integrierte Schaltungseinheiten und insbesondere Teilnehmeranschlußschaltungseinheiten sind daher mit einer seriellen Schnittstelle ausgestattet, bei der Anschlüsse nacheinander von verschiedenartigen Signalen beaufschlagt bzw. zur Abgabe verschiedenartiger Signale ausgenützt werden, so daß die Anzahl der insgesamt erforderlichen Anschlüsse verhältnismäßig klein im Vergleich zu der Anzahl der verschiedenartigen aufzunehmenden oder abzugebenden Signale ist. Dafür müßen aber längere Zeiten für die Abwicklung der Signalübergabe in Kauf genommen werden. Hinzu kommt ein erhöhter Leitungsaufwand für die Abwicklung der Steuerung einer solchen seriellen Schnittstelle.

Solche Verhältnisse sind beispielsweise bei dem aus der Zeitschrift "Elektronik", Band 34, Februar 1985, Seiten 45 bis 50, insbesondere Kapitel 3 auf Seite 47, bekannten Teilnehmeranschluß gegeben.

Die Aufgabe der Erfindung besteht darin, eine digitale Schnittstelle der obengenannten Art dahingehend zu verbessern, daß einerseits die Anschlußzahl geringer ist als bei üblichen Parallelschnittstellen, andererseits die genannten Nachteile einer Serienschnittstelle vermieden sind.

Diese Aufgabe wird erfindungsgemäß mit einer solchen vorgenannten digitalen Schnittstelle dadurch gelöst, daß diese als Parallelschnittstelle realisiert ist, daß sie hierzu eine Anzahl von Anschlüssen aufweist, von denen wenigstens einer in einem Eingabebetrieb der Teilnehmeranschlußschaltungseinheit als Signaleingang und in einem Ausgabebetrieb der Schnittstelle als Datenausgang ausgenutzt ist, die übrigen hingegen in beiden Betriebsarten als Signaleingänge ausgenützt sind, dabei wenigstens zum Teil jedoch im Eingabebetrieb als Eingänge für ihrer Art nach andere Signale dienen als im Ausgabebetrieb, daß einer Gruppe derjenigen Anschlüsse, die als Signaleingänge im Eingabe- und im Ausgabebetrieb verschiedenartige Signale aufnehmen, wenigsten zwei Register mit nachgeschaltetem Decoder sowie eine Umschalteeinrichtung zur wahlweisen Anschaltung der Register und Decoder zugeordnet sind, so daß die möglichen Binärwertkombinationen der Signale an den Anschlüssen dieser Gruppe von denen wenigstens eine ein Umschaltebefehl für die Umschalteeinrichtung ist, mehr Einstellbefehle für die Teilnehmeranschlußschaltungseinheit ergeben, als es der Anzahl der Anschlüsse dieser Gruppe entspricht.

Bei der erfindungsgemäßen digitalen Schnittstelle gibt es zwar auch Anschlüsse, die nicht nur für eine Art von Signalen ausegenutzt sind, es handelt sich dabei jedoch um eine Mehrfachnutzung in der Form, daß die Zuordnung zu einer Art von Signalen in einem Eingabebetrieb und die Zuordnung zu einer anderen Art von Signalen im Ausgabebetrieb vorliegt, so daß nicht vom Prinzip der Parallelschnittstelle abgewichen ist, also der vorerwähnte Nachteil des erhöhten Zeitbedarfs hier nicht auftritt. Darüberhinaus ist mit Hilfe der Verwenung der Register und Decoder zusammen mit der Umschalteeinrichtung eine Art funktionsmäßige Auffächerung der Anschlüsse der Teilnehmeranschlußschaltungseinheit erreicht, so daß trotz der relativ großen Zahl von Einstellbefehlen, die an eine solche Einheit zu senden sind, mit relativ wenig Anschlüssen ausgekommen werden kann.

Gemäß einer weiteren Ausgestaltung der Erfindung kann ohne daß die Zeitbilanz nachteilig beeinflußt wird, die Anzahl der über eine bestimmte Anzahl vorhandener Anschlüsse einzugebenden Signale noch weiter erhöht werden, nämlich dadurch, daß ein Anschluß, der in erster Linie als Eingang für Signale zur Einstellung des Eingabebetriebs und des Ausgabebetriebs dient nachdem ein solcher Eingabebetrieb eingestellt worden ist, zusammen mit bestimmten weiteren Anschlüssen als Eingang für Einstellbefehle an die Teilnehmeranschlußschaltungseinheit ausgenutzt werden kann.

Bei einer Ausführungsform, bei der zwei der genannten Register mit nachgeschaltetem Decoder vorgesehen sind, handelt es sich bei einer weiteren Ausführungform der Erfindung bei den Einstellbefehlen, die von den Anschlüssen aufgenommen werden, wenn das eine Register wirksamgeschaltet ist, um Befehle zur Einstellung vermittlungstechnischer Betriebszustände der Teilnehmeranschlußschaltungseinheit, bei den Einstellbefehlen, die zugeführt werden, wenn das zweite Register wirksamgeschaltet ist, um Befehle, die zur Einstellung verschiedener Speisezustände führen.

Nachstehend wird die Erfindung anhand eines Ausführungsbeispiels unter Bezugnahme auf eine Zeichnung näher erläutert.

In der Zeichnung zeigen:

FIG. 1 Ein Blockschaltbild, das die Anschlußkonfiguration zeigt, in der eine Teilnehmeranschlußschaltungseinheit, deren Bestandteil die erfindungsgemäße
Schnittstelle darstellt, eingesetzt ist.

FIG. 2 Ein Blockschaltbild der erfindungsgemäßen Schnittstelle.

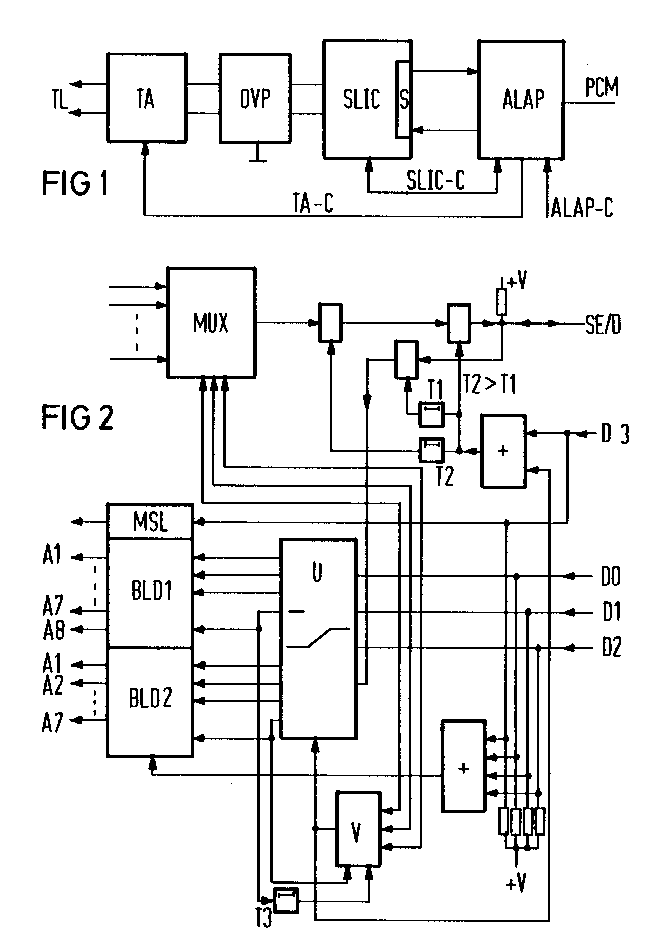

Die FIG. 1 zeigt die wesentlichen im Zusammenhang mit dem Anschluß einer analogen Teilnehmeranschlußleitung TL an die Vermittlungsstelle
eines digitalen Zeitmultiplex-Fernmeldesystems erforderlichen Teile.

Hierzu gehört eine Teilnehmeranschlußschaltungseinheit SLIC, die eine integrierte Schaltungseinheit ist und die in erster Linie für die Speisung
der Teilnehmeranschlußleitung TL, die Rufstromeinspeisung, die Zählimpulseinspeisung, die Leitungszustandsindikation und die Bestimmung der
übertragungstechnischen Eigenschaften verantwortlich ist. Diese Teilnehmeranschlußschaltungseinheit
SLIC, arbeitet mit einer Einheit ALAP zusammen, in
der die Codier- und Decodierfunktionen sowie die
Filterfunktionen im Zusammenhang mit den auf der
Teilnehmeranschlußleitung übertragenen analogen
Signalen realisiert werden. Die Baueinheit ALAP
bedient in der Praxis zwei Teilnehmeranschlußleitungen TL. Sie steht unter dem Steuereinfluß eines
hier nicht dargestellten Mikroprozessors.

Die Teilnehmeranschlußschaltungseinheit SLIC
weist für die Zusammenarbeit mit der Baueinheit
ALAP eine Schnittstelle S auf, die Gegenstand der
vorliegenden Anmeldung ist.

Über die erläuterten Teile hinaus zeigt die FIG.
1 ferner eine Baueinheit OVP durch die der Überspannungsschutz der Teilnehmeranschlußschaltungseinheit SLIC realisiert wird, der im Hinblick
beispielsweise von Blitzschlageinwirkungen auf die
Teilnehmeranschlußleitung TL erforderlich ist.

Eine weitere Baueinheit TA dient der Durchführung von Prüfungen sowohl der Teilnehmeranschlußleitung TL als auch der Teilnehmeranschlußschaltungseinheit SLIC, die von der Baueinheit
ALAP aus gesteuert werden können.

Die FIG. 2 zeigt mehr ins einzelne gehend die
im Zusammenhang mit der FIG. 1 erwähnte
Schnittstelle S der Teilnehmeranschlußschaltungseinheit SLIC. Sie weist vier Anschlüsse SE/D, D3
sowie D0 bis D2 auf. Der Anschluß SE/D dient in
einem Eingabebetrieb der Schnittstelle als Signaleingang für ein Signal, durch das die hier nicht
dargestellte Teilnehmeranschlußschaltungseinheit
SLIC in Betriebsbereitschaft versetzt wird, was insbesondere dann eine Rolle spielt, wenn von der im
Zusammenhang mit FIG. 1 erwähnten Baueinheit
ALAP 2 Teilnehmeranschlußschaltungseinheiten
SLIC bedient werden. In einem Ausgabebetrieb der Schnittstelle dient der Anschluß SE/D als Datenausgang.

Die übrigen Anschlüsse D3 sowie D0 bis D2
werden sowohl im Eingabebetrieb als auch im Ausgabebetrieb der Schnittstelle lediglich als Signaleingänge ausgenutzt. Der Eingang D3 dient in erster Linie der Aufnahme eines Signals, durch das
die Einstellung entweder des Eingabebetriebs oder
des Ausgabebetriebs festgelegt wird.

Die Eingänge D0 bis D2 dienen der Aufnahme
von Einstellbefehlen für die Teilnehmeranschlußschaltungseinheit. Es sind ihnen zwei Register mit
jeweils nachgeschaltetem Decoder BLD 1 und BLD
2 zugeordnet. Diese Register/Dekoder können mit
Hilfe einer Umschalteeinrichtung U alternativ den
genannten Eingangsanschlüssen D0 bis D2 zugeschaltet werden. Normalerweise ist
Register/Dekoder BLD 1 zugeschaltet, in welchem
Fall die Binärwertkombinationen an den Eingangsanschlüssen D0 bis D2 nach Decodierung durch
den erwähnten zugeordneten Decoder 7 verschiedene Einstellbefehle ergeben können, die an einem
der Ausgänge A1 bis A7 des Decoders auftreten,
und die die Einstellung unterschiedlicher vermittlungstechnischer Betriebszustände betreffen. Als
solche vermittlungstechnischen Betriebszustände
sind die Zustände "Ruf" und "Rufpause" zu nennen, ferner Betriebszustände, in denen die Speisegleichspannung mit der einen oder mit der anderen
Polarität wirksam ist. Eine achte der möglichen
Binärwertkombinationen der Signale an den Eingangsanschlüssen D0 bis D2, beispielsweise die
Kombination 111 wird als Umschaltebefehl für die
Umschalteeinrichtung U ausgenutzt um von der
Anschaltung des ersten Registers/Dekoders BLD 1
auf die Anschaltung des zweiten
Registers/Dekoders BLD 2 umzuschalten. Hierzu
werden die an den Eingangsanschlüssen D0 bis D2
anliegenden Signale durch ein Verknüpfungsglied
V miteinander verknüpft.

Wenn das zweite Register mit nachgeschaltetem Decoder BLD 2 wirksamgeschaltet ist, führen
die möglichen Binärwertkombinationen an den Eingangsanschlüssen D0 bis D2 an den Ausgängen 1
bis 7 des betreffenden Decoders zur Abgabe von
Einstellbefehlen, die unterschiedliche Speisezustände herbeiführen. So kann mit diesen Einstellbefehlen in unterschiedlichem Maße eine Begrenzung des Speisestroms herbeigeführt werden, es
kann im Hinblick auf große Längen der angeschlossenen Teilnehmeranschlußleitungen eine Verdoppelung der Speisespannung herbeigeführt werden,
und es läßt sich eine Abtrennung der Teilnehmeranschlußleitung von der Teilnehmeranschlußschaltungseinheit erzielen. Eine achte
der möglichen Binärwertkombinationen ist in dem
dargestellten Realisierungsbeispiel zunächst noch
nicht ausgenutzt.

Man erkennt, daß durch die erfindungsgemäße Maßnahme der Verwendung zweier Register/Dekoder alternativ den Anschlüssen D0 bis D2 zugeordnet werden können, aus den acht verschiedenen Binärwertkombinationen, die durch Anlegen von Digitalsignalen an diese Anschlüsse möglich sind, die doppelte Anzahl von Einstellbefehlen erzeugt werden kann, so daß das Verhältnis von Anschlußzahl zur Zahl der benötigten Einstellbefehle besonders günstig ist.

Im durch Anlegen eines entsprechenden Signals an den Anschluß D3 herbeigeführten Ausgabebetriebe der Teilnehmeranschlußschaltungseinheit wirkt der Anschluß SE/D, wie dargelegt, als Datenausgang.

Bei den hierbei ausgegebenen Daten handelt es sich im konkreten Fall um die Ergebnisse verschiedener Leitungszustandsindikationen, es wird also beispielsweise abgefragt, ob ein Schleifenschluß vorliegt, ob ein Erdschluß vorliegt oder ob eine bestimmte Speisestrombegrenzung vorgenommen ist, und dergleichen. Diese Indikationsergebnisse gelangen an den Eingang eines Multiplexers MUX. Die im Ausgabebetrieb an den Anschlüssen D0 bis D2 anliegenden Binärwertkombinationen dienen dabei dazu, bestimmte der Indikationsergebnisse abzufragen bzw. über den Anschluß SE/D weitergeben zu lassen.

Mit einer bestimmten Binärwertkombination von an allen vier der Anschlüsse D3 sowie D0 bis D2 auftretenden Signalen, die auch zu einer Umschaltung auf das Register/Dekoder BLD 1 führt, wird ein Standby-Zustand eingestellt, was dann von Bedeutung ist, wenn die im Zusammenhang in FIG. 1 erwähnte Einheit ALAP 2 Teilnehmeranschlußschaltungseinheiten SLIC im Wechsel bedient.

**Patentansprüche**

1.  Digitale Schnittstelle einer integrierten Teilnehmeranschlußschaltungseinheit (SLIC) für den Anschluß von analogen Teilnehmeranschlußleitungen (TL) eines digitalen Zeitmultiplex-Fernmeldenetzes, über die einerseits die Einstellung verschiedener Betriebszustände der Teilnehmeranschlußschaltungseinheit (SLIC) veranlaßt wird, andererseits die Abfrage der Ergebnisse der in der Teilnehmeranschlußschaltungseinheit (SLIC) vorgenommenen Teilnehmeranschlußleitungsindikationen erfolgt,
    **dadurch gekennzeichnet,**
    -   daß sie als Parallelschnittstelle realisiert ist,
    -   daß sie hierzu eine Anzahl von Anschlüssen (SE/D; D3; D0 bis D2) aufweist, von denen wenigstens einer (SE/D) in einem Eingabebetrieb der Teilnehmeranschlußschaltungseinheit als Signaleingang und in einem Ausgabebetrieb der Teilnehmeranschlußschaltungseinheit als Datenausgang ausgenutzt ist, die übrigen (D3; D0 bis D2) hingegen in beiden Betriebsarten als Signaleingänge ausgenutzt sind, dabei wenigstens z. T. (D0 - D2) jedoch im Eingabebetrieb als Eingänge für ihrer Art nach andere Signale dienen als im Ausgabebetrieb,
    -   daß einer Gruppe derjenigen Anschlüsse (D0 - D2), die als Signaleingänge im Eingabe- und im Ausgabebetrieb verschiedenartige Signale aufnehmen wenigstens zwei Register mit nachgeschaltetem Decoder (BLD 1, BLD 2) sowie eine Umschalteeinrichtung (U) zur wahlweisen Anschaltung der Register und Decoder zugeordnet sind, so daß die möglichen Binärwertkombinationen der Signale an den Anschlüssen (D0 - D2) dieser Gruppe, von denen wenigstens eine ein Umschaltebefehl für die Umschalteeinrichtung (U) ist, mehr Einstellbefehle für die Teilnehmeranschlußschaltungseinheit (SLIC) ergeben, als es der Anzahl der Anschlüsse (D0 - D2) dieser Gruppe entspricht,
    -   daß einer der Anschlüsse (D3), die nur als Eingang dienen, zur Aufnahme der die Einstellung des Eingabebetriebs und des Ausgabebetriebs bewirkenden Signale dient.

2.  Digitale Schnittstelle nach Anspruch 1 mit zwei Registern und nachgeschalteten Decodern (BLD 1, BLD 2),
    **dadurch gekennzeichnet,**
    -   daß nach Einstellung des Eingabebetriebs zunächst immer dasselbe eine Register mit nachgeschaltetem Decoder (BLD 1) wirksamgeschaltet ist, und
    -   daß nach einer Umschaltung auf das zweite Register mit nachgeschaltetem Decoder (BLD 2) aufgrund eines Umschaltebefehls der eine Anschluß (D3) zur Aufnahme des den Eingabebetrieb bewirkenden Signals zusammen mit den Anschlüssen (D0 - D2) der genannten Gruppe von Anschlüssen der Aufnahme von Einstellbefehlen dient.

3.  Digitale Schnittstelle nach Anspruch 2,
    **dadurch gekennzeichnet,**
    -   daß die Binärwertkombinationen an den Anschlüssen (D0 - D2) der genannnten Gruppe von Anschlüssen, sofern das erste Register mit nachgeschaltetem Decoder (BLD 1) wirksamgeschaltet ist, Einstellbefehle für die Einstellung verschiedener vermittlungstechnischer Betriebszustände oder, sofern das zweite Register mit nachgeschaltetem Decoder (BLD 2) wirksamgeschaltet ist, zusammen mit dem Binärwert des zuvor das Signal für die Einstellung des Eingabebetriebs aufnehmenden Anschlusses (D3) Einstellbefehle für die Einstellung verschiedener Speisezustände ergeben.

## Claims

1. Digital interface of an integrated subscriber line interface circuit (SLIC) for connecting analog subscriber lines (TL) of a digital time-division multiplex telecommunication network, via which, on the one hand, the setting of various operating states of the subscriber line interface circuit (SLIC) is initiated and, on the other hand, the results of the subscriber line indications effected in the subscriber line interface circuit (SLIC) are interrogated, characterised in that
   - it is implemented as parallel interface
   - in that, for this purpose, it exhibits a number of connections (SE/D; D3; D0 to D2), at least one of which (SE/D) is used as signal input in an input mode of the subscriber line interface circuit and is used as data output in an output mode of the subscriber line interface circuit, whereas the remaining ones (D3; D0 to D2) are used as signal inputs in both operating modes, and at least in some cases (D0 - D2), however, as inputs for signals of different type in input mode than in output mode,
   - in that a group of those connections (D0 - D2) which, as signal inputs, accept signals of different type in input and in output mode, are associated with at least two registers with subsequent decoder (BLD 1, BLD 2) and a switch-over device (U) for optionally connecting the registers and decoders so that the possible binary-value combinations of the signals at the connections (D0 - D2) of this group, at least one of which is a switch-over command for the switch-over device (U), result in more setting commands for the subscriber line interface circuit (SLIC) than corresponds to the number of connections (D0 - D2) of this group,
   - in that one of the connections (D3) which are only used as input, is used for accepting the signals effecting the setting of the input mode and the output mode.

2. Digital interface according to Claim 1, having two registers and subsequent decoders (BLD 1, BLD 2), characterised in that,
   - after the input mode has been set, the same one register with subsequent decoder (BLD 1) is always first switched to be effective, and
   - in that after a switch-over to the second register with subsequent decoder (BLD 2) on the basis of a switch-over command, the one connection (D3) for accepting the signal effecting the input mode, together with the connections (D0 - D2) of the said group of connections, is used for accepting setting commands.

3. Digital interface according to Claim 2, characterised in that
   - the binary-value combinations at the connections (D0 - D2) of the said group of connections, if the first register with subsequent decoder (BLD 1) has been switched to be effective, produce setting commands for setting various switching states of operation or, if the second register with subsequent decoder (BLD 2) has been switched to be effective, together with the binary value of the connection (D3) previously accepting the signal for setting the input mode, produce setting commands for setting various power-feeding states.

## Revendications

1. Interface numérique d'une unité intégrée (SLIC) formant circuit de raccordement d'abonné pour le raccordement de lignes analogiques d'abonnés (TL) d'un réseau de télécommunication numérique à multiplexage temporel, et au moyen de laquelle, d'une part, le réglage d'états différents de fonctionnement de l'unité (SLIC) formant circuit de raccordement d'abonné, est déclenché et d'autre part l'interrogation des résultats des indications de la ligne d'abonné, formées dans l'unité (SLIC) formant circuit de raccordement d'abonné, est réalisée, caractérisée par le fait
   - qu'elle est réalisée sous la forme d'une interface parallèle,
   - qu'à cet effet, elle possède un nombre de bornes (SE/D; D3; D0 à D2), dont l'une au moins (SE/D) est utilisée en tant qu'entrée des signaux dans un fonctionnement d'entrée de l'unité formant circuit de raccordement d'abonné et en tant que sortie de données dans un fonctionnement de sortie de l'unité du circuit de raccordement d'abonné, tandis que les autres bornes (D3; D0 à D2) sont utilisées en tant qu'entrées de signaux, dans les deux types de fonctionnement, mais qu'en partie (D0-D2), dans le fonctionnement d'entrée, sont utilisés, en tant qu'entrées en fonction de leur type, des signaux autres que ceux utilisés dans le fonctionnement de sortie,

- qu'à un groupe des bornes (D0-D2), qui reçoivent en tant que signaux d'entrée, des signaux de différents types dans le fonctionnement d'entrée et dans le fonctionnement de sortie, sont associés au moins deux registres en aval desquels sont branchés des décodeurs (BLD 1, BLD 2), ainsi qu'un dispositif de commutation (U) servant à raccorder au choix les registres et les décodeurs, de sorte que les combinaisons possibles de valeurs binaires de signaux sur les bornes (D0-D2) de ce groupe, dont l'un au moins est une instruction de commutation pour le dispositif de commutation (Q), fournissent plus d'instructions de réglage pour l'unité (SLIC) du circuit de raccordement d'abonné que ceux qui correspondent au nombre des bornes (D0-D2) de ce groupe,

- que l'une des bornes (D3), qui sont utilisées uniquement en tant qu'entrée, sert à recevoir les signaux provoquant le réglage du fonctionnement d'entrée et du fonctionnement de sortie.

**2.** Interface numérique suivant la revendication 1 comportant deux registres et deux décodeurs (BLD 1, BLD 2) branchés en aval, caractérisée par le fait

- qu'après le réglage du fonctionnement d'entrée, tout d'abord le même registre, en aval duquel est branché le décodeur (BID 1), est toujours activé, et

- qu'après une commutation sur le second registre en aval duquel est branché le décodeur (BLD 2), sur la base d'une instruction de commutation, une borne (D3), servant à recevoir le signal provoquant le fonctionnement d'entrée, est utilisée, conjointement avec les bornes (D0-D2) dudit groupe de bornes pour recevoir des instructions de réglage.

**3.** Interface numérique suivant la revendication 2, caractérisée par le fait

- que les combinaisons de valeurs binaires au niveau des bornes (D0-D2) dudit groupe de bornes fournissent, dans la mesure où le premier registre en aval duquel est branché le décodeur (BLD 1) est activé, des instructions de réglage pour le réglage de différents états de service techniques de commutation ou, dans la mesure où le second registre en aval duquel est branché le décodeur (BLD 2) est activé, conjointement avec la valeur binaire de la borne (D3) recevant au préalable le signal pour le réglage du fonctionnement d'entrée, des instructions de réglage pour le réglage des différents états d'alimentation.

FIG 1

FIG 2

8